(19) Europäisches Patentamt
European Patent Office
Office européen des brevets

(11) **EP 0 821 854 B1**

(12) **EUROPÄISCHE PATENTSCHRIFT**

(45) Veröffentlichungstag und Bekanntmachung des Hinweises auf die Patenterteilung:
**18.02.2009 Patentblatt 2009/08**

(21) Anmeldenummer: **96942255.9**

(22) Anmeldetag: **26.09.1996**

(51) Int Cl.:
***H04L 27/38*** *(2006.01)*

(86) Internationale Anmeldenummer:
**PCT/DE1996/001873**

(87) Internationale Veröffentlichungsnummer:
**WO 1997/030536 (21.08.1997 Gazette 1997/36)**

(54) **FREQUENZFEHLERDETEKTOR**

FREQUENCY ERROR DETECTOR

DETECTEUR D'ERREUR DE FREQUENCE

(84) Benannte Vertragsstaaten:
**DE FR IT SE**

(30) Priorität: **16.02.1996 DE 19605704**

(43) Veröffentlichungstag der Anmeldung:
**04.02.1998 Patentblatt 1998/06**

(73) Patentinhaber: **Ericsson AB**
**Stockholm (SE)**

(72) Erfinder: **HERBIG, Peter**
**D-71522 Backnang (DE)**

(74) Vertreter: **Pellkofer, Dieter**
**Manitz, Finsterwald & Partner GbR**
**Martin-Greif-Strasse 1**
**80336 München (DE)**

(56) Entgegenhaltungen:
**DE-A- 3 707 762**

- **IEEE TRANSACTIONS ON COMMUNICATIONS, Bd. 37, Nr. 2, Februar 1989, Seiten 159-163, XP000054274 ALBERTY T. ET AL.: "A NEW PATTERN JITTER FREE FREQUENCY ERROR DETECTOR"**

EP 0 821 854 B1

**Beschreibung**

Stand der Technik

Die vorliegende Erfindung betrifft einen Frequenzfehlerdetektor, welcher die Frequenzablage zwischen einer in einem Empfänger für kohärent modulierte Signale erzeugten Trägerfrequenz und der Trägerfrequenz eines Empfangssignals ermittelt, wobei ein erster Differenzleistungsmesser vorhanden ist, der die Leistungsdifferenz zwischen symmetrisch zu der Empfänger-Trägerfrequenz liegenden Spektralanteilen des durch Abtastung des Empfangssignals unter Einhaltung des Nyquist-Kriteriums entstandenen, Empfangssignal-Spektrums bildet.

Frequenzfehlerdetektoren werden zur automatischen Freqenzkontrolle (AFC) in Regelschleifen eingesetzt, die sich zum Beispiel in Funkübertragungsempfängern für kohärent modulierte (zum Beispiel Quadraturamplitudenmodulation QAM) Signale befinden, um die Trägerfrequenz des Empfängers an die Trägerfrequenz des Senders, das heißt die Trägerfrequenz des empfangenen Signals, anzugleichen. Daneben besitzen diese Empfänger für kohärent modulierte Signale oft eine weitere Regelschleife zur Trägerphasensynchronisation, welche in der Lage ist, bei nicht sehr großen Frequenzabweichungen zu synchronisieren. Der bei der Synchronisation der Trägerphase zulässige Frequenzfehler wird Fangbereich genannt. Da zu Beginn einer Übertragung oder nach einem Systemausfall die Sendeträgerfrequenz unbekannt ist, muß der Empfänger in der Lage sein, diese Frequenz zuverlässig zu schätzen. Die Genauigkeit dieser Schätzung muß hierbei innerhalb des Fangbereichs der Trägerphasensynchronisation liegen. Die Größe dieses Fangbereiches ist von einigen Systemparametern des Funksystems abhängig. Schmalbandige Funksysteme mit einer hohen Anzahl von Modulationsstufen haben einen kleineren, breitbandige Systeme mit weniger Modulationsstufen dagegen einen größeren Fangbereich.

Eine geeignete Einrichtung, welche die Trägerfrequenz des Empfängers auf die Sendeträgerfrequenz synchronisiert, ist ein Frequenzfehlerdetektor der einleitend genannten Art. Dieser mißt die Differenzleistung des Empfangssignal-Spektrums symmetrisch zur Bandmitte. Ein auf diese Weise erzeugtes Fehlersignal verschwindet bei korrekter Trägerfrequenz im Empfänger. Ein solcher Frequenzfehlerdetektor ist ein Quadrikorrelator, wie er zum Beispiel aus der DE 37 07 762 C2 bekannt ist. Dieser Quadrikorrelator reagiert sehr empfindlich auf Signalverzerrungen; das heißt, er liefert eine falsche Information über die Frequenzablage, wenn das Empfangssignal-Spektrum aufgrund von Kanalverzerrungen eine Schräglage aufweist. Gerade Funksysteme weisen in der Regel starke Kanalverzerrungen auf. Der Frequenzfehlerdetektor gemäß dem Stand der Technik wäre demnach nicht geeignet für einen Empfänger eines Übertragungssystems, in dem mit Kanalverzerrungen zu rechnen ist.

Der Erfindung liegt daher die Aufgabe zugrunde, einen Frequenzfehlerdetektor der eingangs genannten Art anzugeben, der unabhängig von Kanalverzerrungen eine möglichst exakte Information über die Ablage der Trägerfrequenz im Empfänger gegenüber der Sendeträgerfrequenz liefert.

Vorteile der Erfindung

Die gestellte Aufgabe wird gemäß den Merkmalen des Anspruchs 1 dadurch gelöst, daß ein zweiter Differenzleistungsmesser vorhanden ist, der die Leistungsdifferenz zwischen symmetrisch zu der Empfänger-Trägerfrequenz liegenden Spektralanteilen des durch Unterabtastung, d. h. durch Abtastung unter Nichteinhaltung des Nyquist-Kriteriums des Empfangssignals entstandenen Spektrums bildet, und daß zur Kompensation der Abhängigkeit des Ausgangssignals des ersten Differenzleistungsmessers von Kanalverzerrungen eine Summierschaltung vorgesehen ist, welche aus den Ausgangssignalen der beiden Differenzleistungsmesser ein Summensignal erzeugt, das eine Information über die Frequenzablage liefert.

Zweckmäßige Weiterbildungen der Erfindung gehen aus den Unteransprüchen hervor.

Beschreibung eines Ausführungsbeispiels

Anhand eines in der Zeichnung dargestellten Ausführungsbeispiels wird nachfolgend die Erfindung näher erläutert. Es zeigen:

Figur 1 ein Blockschaltbild eines Empfängers,
Figur 2 ein in dem Empfänger eingesetzter Frequenzfehlerdetektor,
Figur 3, 3a, 3b zu einem ersten Differenzleistungsmesser gehörende Signalspektren und
Figuren 4, 4a, 4b zu einem zweiten Differenzleistungsmesser gehörende Signalspektren.

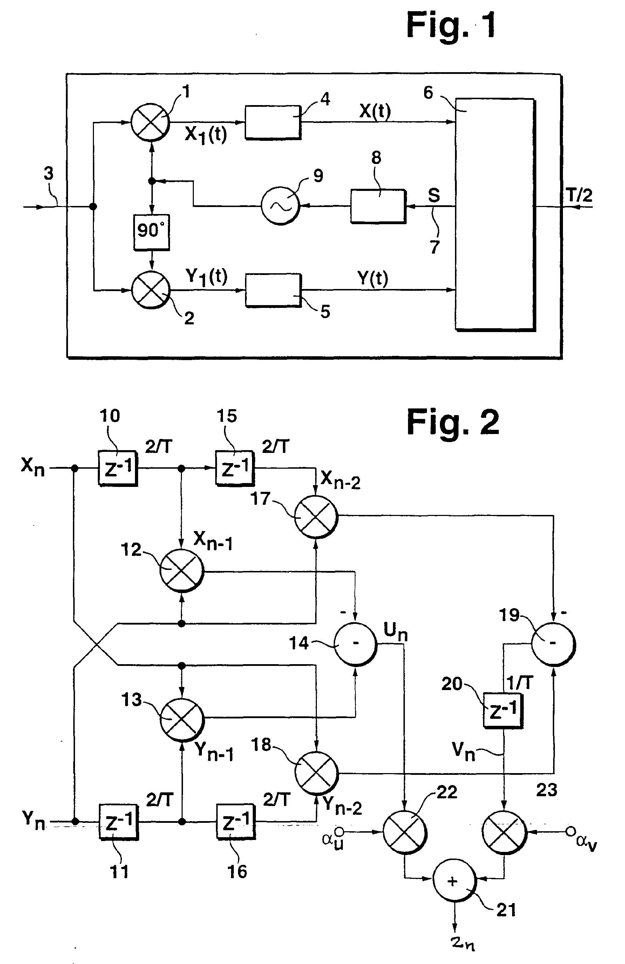

Die Figur 1 stellt einen als Phasenregelkreis ausgebildeten Empfänger für kohärent modulierte Signale, beispielsweise QAM-Signale, dar. Dieser Phasenregelkreis besitzt zwei

Mischer 1 und 2, die das ihnen über die Eingangsleitung 3 zugeführte Empfangssignal in die zwei Basisbandsignale X1 (t) und Y1 (t) umsetzen. In den beiden Basisbandsignalen X1 (t) und Y1 (t) unterdrücken Tiefpässe 4 und 5 unerwünschte Signalanteile und generieren so die zwei Signale X(t) und Y(t). Beide Signale X(t) und Y(t) werden einem Schaltblock 6 mit einem Frequenzfehlerdetektor zugeführt, der die Signale X(t) und Y(t) in einer unten noch genauer beschriebenen Art und Weise auswertet und ein Frequenzkorrektursignal S daraus ableitet, das über die Ausgangsleitung 7 an ein Regelfilter 8 abgegeben wird. Dieses Regelfilter 8 hat die Aufgabe, das Frequenzkorrektursignal S zu glätten und es an einen steuerbaren Oszillator 9 weiterzuleiten, der ein Trägersignal für die Mischer 1 und 2 generiert, wobei das Trägersignal für den Mischer 2 um 90° in der Phase gedreht wird. Der Frequenzfehlerdetektor 6 benötigt zum Abtasten der aus dem Empfangssignal abgeleiteten, um 90° gegeneinander phasenversetzten Signalkomponenten X (t) und Y(t) einen Abtasttakt, welcher dem T/2 halben Symboltakt des Empfangssignals entspricht. Die Signalkomponenten X(t) und Y(t) geben nur dann exakt den jeweiligen Empfangssignalwert wieder, wenn der vom Oszillator 9 erzeugte Träger mit dem Träger des Empfangssignals frequenzsynchron ist.

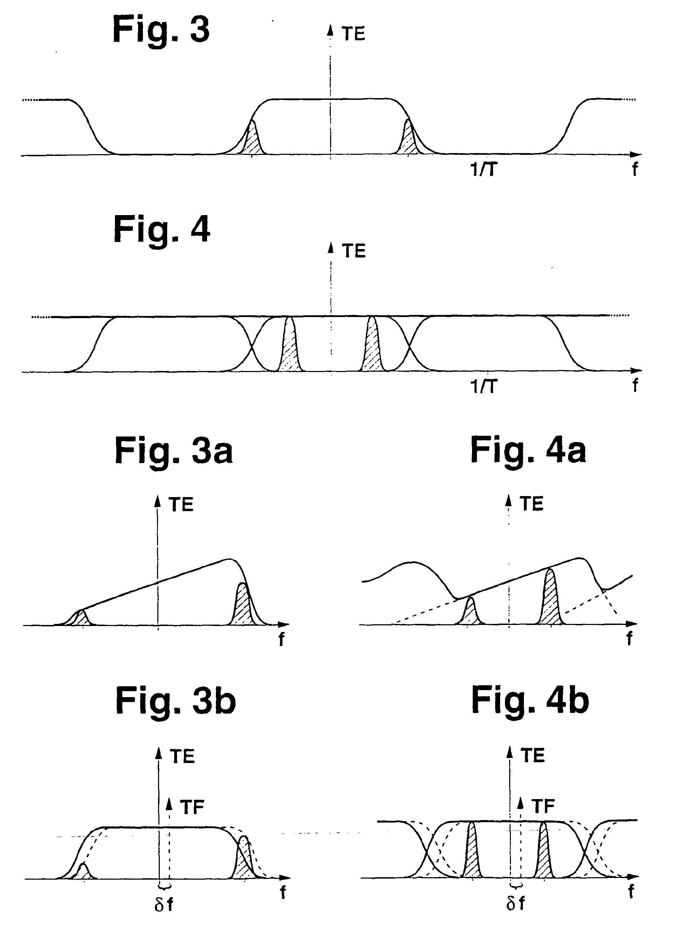

Wie einleitend ausgeführt, soll der Frequenzfehlerdetektor möglichst unabhängig von vorliegenden Kanalverzerrungen eine Information über die Frequenzablage zwischen der Trägerfrequenz des Oszillators 9 und der Trägerfrequenz des empfangenen Signals abgeben. Diese Forderung erfüllt ein Frequenzfehlerdetektor, der aus zwei Differenzleistungsmessern, zum Beispiel Quadrikorrelatoren, besteht. Ein Differenzleistungsmesser bildet bekannterweise die Leistungsdifferenz zwischen symmetrisch zur Empfänger-Trägerfrequenz liegenden Spektralanteilen des Empfangssignal-Spektrums. Der erste Differenzleistungsmesser erhält ein Empfangssignal-Spektrum, das aus einer zweifachen Abtastung je Symboltakt des Empfangssignals (Einhaltung des Nyquist-Kriteriums) entsteht. Die Figur 3 zeigt ein solches Spektrum, das sich periodisch ohne Überlappung wiederholt. Das in Figur 3 gezeigte Spektrum liegt idealerweise symmetrisch zur Empfänger-Trägerfrequenz TE; das heißt, es liegt keine Frequenzablage zwischen der Empfänger-Trägerfrequenz TE und der Trägerfrequenz des Empfangssignals vor. Die schraffiert gezeichneten Durchlaßbereiche zweier Bandpaßfilter des Differenzleistungsmessers liegen ebenfalls symmetrisch zur Empfänger-Trägerfrequenz TE in der Nähe der Nyquist-Flanken des Empfangssignal-Spektrums. Die von den beiden Bandpaßfiltern selektierten Spektralanteile sind in diesem Fall gleich groß, so daß die Differenz zwischen den Leistungen dieser Spektralanteile den Wert Null ergibt. Der zweite Differenzleistungsmesser verarbeitet ein in Figur 4 dargestelltes überfaltetes Spektrum, das durch Unterabtastung (Nichteinhaltung des Nyquist-Kriteriums) entsteht. Diese einander überlappenden Spektren erhält man, wenn das Empfangssignal nur einmal pro Symboltakt T abgetastet wird. Die Durchlaßbereiche der Bandpaßfilter dieses zweiten Differenzleistungsmessers liegen nun näher bei der Trägerfrequenz TE des Empfangssignals, also in einem größeren Abstand von den Nyquist-Flanken des Spektrums.

Wie an den Figuren 3a, 3b und 4a, 4b noch näher erläutert, zeigt das Ausgangssignal des ersten Differenzleistungsmessers sowohl eine Abhängigkeit von einem Frequenzversatz als auch von einer Kanalverzerrung, und das Ausgangssignal des zweiten Differenzleistungsmessers zeigt nahezu keine Abhängigkeit von einer Frequenzablage, sondern nur von einer durch Kanalverzerrungen verursachten Schräglage des Spektrums. Der zweite Differenzleistungsmesser könnte daher auch als Verzerrungsdetektor bezeichnet werden.

In der Figur 3a ist ein vom ersten Differenzleistungsmesser bearbeitetes Spektrum dargestellt, das keinen Frequenzversatz, aber eine aufgrund von Kanalverzerrungen verursachte Schräglage aufweist. Die Darstellung macht deutlich, daß die symmetrisch zur Empfänger-Trägerfrequenz TE selektierten Spektralanteile wegen der Schräglage unterschiedliche Leistungen aufweisen. Das Ausgangssignal des ersten Differenzleistungsmessers ist also abhängig von Kanalverzerrungen. Außerdem ist es natürlich abhängig von einem Versatz δ f zwischen der Empfänger-Trägerfrequenz TE und der Empfangssignal-Trägerfrequenz TF, wie die Figur 3b verdeutlicht. Die durchgezogene Linie stellt ein Spektrum dar ohne Frequenzversatz und die strichliert gezeichnete Linie ein Spektrum mit dem Frequenzversatz δ f. Die vom ersten Differenzleistungsmesser an den Nyquist-Flanken des um δ f versetzten Spektrums selektierten Spektralanteile weisen in Abhängigkeit von dem Frequenzversatz δ f unterschiedlich große Leistungen auf. Insofern enthält das Ausgangssignal dieses ersten Differenzleistungsmessers eine Information über den Frequenzversatz δ f.

In der Figur 4a ist ein überfaltetes Spektrum mit durch Kanalverzerrungen verursachten Schräglagen dargestellt, welches vom zweiten Differenzleistungsmesser verarbeitet wird. Hier zeigt sich, daß die symmetrisch zur Empfänger-Trägerfrequenz TE selektierten Spektralanteile unterschiedliche Leistungen aufweisen, das Ausgangssignal des zweiten Differenzleistungsmessers also ebenfalls von Kanalverzerrungen abhängig ist Kommt es allerdings zu einer Frequenzablage δ f zwischen der Empfänger-Trägerfrequenz TE und der Trägerfrequenz TF des Empfangssignals, so haben die aus dem verschobenen Spektrum (strichlierter Verlauf) selektierten Spektralanteile gleich große Leistung. Die Leistungsdifferenz der selektierten Spektralanteile ist daher Null, obwohl eine Frequenzablage δ f vorliegt. Das Ausgangssignal des zweiten Differenzleistungsmessers zeigt also nur eine Abhängigkeit von Kanalverzerrungen. Das ausschließlich von Kanalverzerrungen abhängige Ausgangssignal des zweiten Differenzleistungsmessers kann somit dazu verwendet werden, um die Abhängigkeit des Ausgangssignals des ersten Differenzleistungsmessers von Kanalverzerrungen zu kompensieren, so daß letztendlich ein aus der Überlagerung beider Ausgangssignale entstehendes Signal nur noch von der Frequenzablage zwischen der Empfänger-Trägerfrequenz TE und der Empfangssignal-Trägerfrequenz TF abhängt. Ein solches Fehlerkorrektursignal S (Figur 1) würde den Oszillator 9, unabhängig von Kanalverzerrungen, auf die korrekte Trägerfrequenz synchronisieren.

In der Figur 2 ist ein einfaches Beispiel für eine Schaltung dargestellt, in der die beiden Differenzleistungsmesser miteinander kombiniert sind. In dem Ausführungsbeispiel haben die Differenzleistungsmesser jeweils die Struktur eines Quadrikorrelators, wie er beispielsweise aus der DE 37 07 762 C2 bekannt ist. An zwei Eingängen des Frequenzfehlerdetektors liegen die durch Abtastung der Inphase-Signalkomponente X(t) und der Quadratur-Signalkomponente Y(t) des Empfangssignals gewonnenen zeitdiskreten Signale $x_n$ und $y_n$ an. Aus diesen zeitdiskreten Signalen $x_n$ und $y_n$ gewinnt ein erster Quadrikorrelator gemäß Gleichung (1) ein Signal $u_n$, das sowohl eine Abhängigkeit von einer Frequenzablage als auch von Kanalverzerrungen aufweist.

$$u_n \; = \; y_n \; x_{n-1} \; - \; x_n y_{n-1} \tag{1}$$

Die Indizes n und n-1 geben die Abtastzeitpunkte im halben Abtasttakt T/2 an. Diese Gleichung (1) wird gemäß Figur 2 realisiert mit Hilfe von zwei Verzögerungsgliedern 10 und 11, welche die zeitdiskreten Eingangssignale $x_n$ und $y_n$ um einen Abtasttakt verzögern und einem ersten Multiplizierer 12, der das Produkt $y_n x_{n-1}$ erzeugt und einem zweiten Multiplizierer, der das Produkt $x_n y_{n-1}$ bildet. Ein Subtrahierer 14 bildet die Differenz der Ausgangssignale der beiden Multiplizierer 12 und 13 und liefert schließlich das Signal $U_n$.

Das Ausgangssignal $v_n$ des zweiten Differenzleistungsmessers für das überfaltete Empfangssignal-Spektrum resultiert aus der in Gleichung (2) angegebenen Verknüpfung der zeitdiskreten Empfangssignalwerte $x_n$, $x_{n-2}$ und $y_n$, $Y_{n-2}$.

$$v_n = \begin{cases} y_n \; x_{n-2} \; - \; x_n \; y_{n-2} & n \; gerade \\ 0 & n \; ungerade \end{cases} \tag{2}$$

Die Empfangssignalwerte $x_{n-2}$ und $y_{n-2}$ zum Zeitpunkt n-2 gewinnt man durch weitere Verzögerungsglieder 15 und 16, die den ersten Verzögerungsgliedern 10 und 11 in Reihe geschaltet sind. Ein Multiplizierer 17 erzeugt das Produkt der Empfangssignalwerte $y_n x_{n-2}$, und ein Multiplizierer 18 erzeugt das Produkt der Empfangssignalwerte $x_n y_{n-2}$. Die Differenz aus beiden Produkten gemäß Gleichung (2) erzeugt ein Subtrahierer 19. Das an den Ausgang des Subtrahierers 19 angeschlossene Verzögerungsglied 20 arbeitet mit dem Symboltakt 1/T, greift also nur jeden zweiten Wert des Differenzsignals heraus. Durch diese Unterabtastung erhält man das oben beschriebene überfaltete Spektrum gemäß den Figuren 4, 4a, 4b. Das Ausgangssignal $v_n$ des Verzögerungsgliedes 20 zeigt die gewünschte Abhängigkeit ausschließlich von den Kanalverzerrungen. Durch Kombination des allein von den Kanalverzerrungen abhängigen Signals $v_n$ und des sowohl von einer Frequenzablage als auch von Kanalverzerrungen abhängige Signal $u_n$ erhält man ein Signal, in dem sich die Einflüsse von Kanalverzerrungen gegenseitig kompensieren und das schließlich nur noch von der Frequenzablage zwischen dem Empfänger-Träger und dem Empfangssignal-Träger abhängt. Um eine optimale Kompensation der Kanalverzerrungen zu erreichen, ist es zweckmäßig, die beiden Signale $u_n$ und $v_n$ über Multiplizierer 22 und 23 mit geeigneten Wichtungsfaktoren $\alpha_n$ und $\alpha_v$ zu wichten. Ein Summierer 21 überlagert schließlich die gewichteten Ausgangssignale $u_n$ und $v_n$ der beiden Differenzleistungsmesser, zu dem in Gleichung (3) angegebenen Signal $z_n$, welches unbeeinflußt von Kanalverzerrungen die gewünschte Information über die Frequenzablage liefert.

$$z_n \; = \; \alpha_n \; u_n \; + \; \alpha_v \; v_n \tag{3}$$

**Patentansprüche**

1.   Frequenzfehlerdetektor, welcher die Frequenzablage zwischen einer in einem Empfänger für kohärent modulierte Signale erzeugten Trägerfrequenz (TE) und der Trägerfrequenz (TF) eines Empfangssignals ermittelt, wobei ein erster Differenzleistungsmesser (10, 11, 12, 13, 14) vorhanden ist, der die Leistungsdifferenz zwischen symmetrisch zu der Empfänger-Trägerfrequenz (TE) liegenden Spektralanteilen des durch Abtastung des Empfangssignals unter Einhaltung des Nyquist-Kriteriums entstandenen Empfangssignal-Spektrums bildet, **dadurch gekennzeichnet,**

**daß** ein zweiter Differenzleistungsmesser (10, 11, 15, 16, 17, 18, 19, 20) vorhanden ist, der die Leistungsdifferenz zwischen symmetrisch zu der Empfänger-Trägerfrequenz (TE) liegenden Spektralanteilen des durch Unterabtastung, d. h. durch Abtastung unter Nichteinhaltung des Nyquist-Kriteriums des Empfangssignals entstandenen Spektrums bildet, und daß zur Kompensation der Abhängigkeit des Ausgangssignals des ersten Differenzleistungsmessers von Karialverzerrungen eine Summierschaltung (21) vorgesehen ist, welche aus den Ausgangssignalen ($u_n$, $v_n$) der beiden Differenzleistungsmesser (10, ..., 20) ein Summensignal ($z_n$) erzeugt, das eine Information über die Frequenzablage liefert.

**2.** Frequenzfehlerdetektor nach Anspruch 1, **dadurch gekennzeichnet, daß** die beiden Differenzleistungsmesser (10, ..., 20) als Quadrikorrelatoren ausgeführt sind.

**3.** Frequenzfehlerdetektor nach Anspruch 1 oder 2, **dadurch gekennzeichnet, daß** der erste Differenzleistungsmesser (10, 11, 12, 13, 14) ein Spektrum auswertet, das durch zweimalige Abtastung des Empfangssignals je Symboltakt entsteht und daß der zweite Differenzleistungsmesser (10, 11, 15, 16, 17, 18, 19, 20) ein Spektrum auswertet, das durch einmalige Abtastung des Empfangssignals je Symboltakt entsteht.

**Claims**

**1.** A frequency error detector which determines the frequency shift between a carrier frequency (TE) generated in a receiver for coherently modulated signals and the carrier frequency (TF) of a received signal, wherein a first differential power meter (10, 11, 12, 13, 14) is present which forms the power difference between spectral portions of the received signal spectrum generated by sampling the received signal while maintaining the Nyquist criterion, said spectral portions being disposed symmetrically to the receiver carrier frequency (TE), **characterised in that** a second differential power meter (10, 11, 15, 16, 17, 18, 19, 20) is present which forms the power difference between spectral portions of the spectrum generated by undersampling the received signal, i.e. by sampling while not maintaining the Nyquist criterion, said spectral portions being disposed symmetrically to the receiver carrier frequency (TE); and **in that** a summation circuit (21) is provided for the compensation of the dependence of the output signal of the first differential power meter on channel distortion, said summation circuit generating a sum signal ($z_n$) from the output signals ($u_n$, $v_n$) of the two differential power meters (10, ..., 20), which delivers information on the frequency shift.

**2.** A frequency error detector according to claim 1, **characterized in that** the two differential power meters (10, ..., 20) are made as quadricorrelators.

**3.** A frequency error detector according to claim 1 or claim 2, **characterized in that** the first differential power meter (10, 11, 12, 13, 14) evaluates a spectrum formed by sampling the received signal twice per symbol pulse; and **in that** the second differential power meter (10, 11, 15, 16, 17, 18, 19, 20) evaluates a spectrum formed by sampling the received signal once per symbol pulse.

**Revendications**

**1.** Détecteur d'erreur de fréquence qui détermine la dérive de fréquence entre une fréquence porteuse (TE) engendrée dans un récepteur pour des signaux modulés de façon cohérente et la fréquence porteuse (TF) d'un signal de réception, dans lequel il y a un premier wattmètre différentiel (10, 11, 12, 13, 14) qui forme la différence de puissance entre des parts spectrales, situées symétriquement à la fréquence porteuse (TE) de récepteur, du spectre de signaux de réception formés par le balayage du signal de réception en respectant le critère de stabilité de Nyquist, **caractérisé en ce qu'**il y a un deuxième wattmètre différentiel (10, 11, 15, 16, 17, 18, 19, 20) qui forme la différence de puissance entre des parts spectrales, situées symétriquement à la fréquence porteuse (TE) de récepteur, du spectre de signaux de réception formés par le sous-balayage du signal de réception en ne respectant pas le critère de stabilité de Nyquist, et **en ce que** pour compenser la dépendance du signal de sortie du premier wattmètre différentiel par rapport aux distorsions de voie, il est prévu un circuit de sommation (21) qui engendre à partir des signaux de sortie ($u_n$, $v_n$) des deux wattmètres différentiel (10, ..., 20) un signal de sommation ($z_n$) qui fournit une information sur la dérive de fréquence.

**2.** Détecteur d'erreur de fréquence selon la revendication 1, **caractérisé en ce que** les deux wattmètres différentiels (10, ..., 20) sont réalisés sous forme de quadricorrélateurs.

3. Détecteur d'erreur de fréquence selon la revendication 1 ou 2, **caractérisé en ce que** le premier wattmètre différentiel (10, 11, 12, 13, 14) évalue un spectre qui se produit par double balayage du signal de réception pour chaque rythme symbole, et **en ce que** le deuxième wattmètre différentiel (10, 11, 15, 16, 17, 18, 19, 20) évalue un spectre qui se produit par balayage unique du signal de réception pour rythme symbole.

EP 0 821 854 B1

# Fig. 1

# Fig. 2

# Fig. 3

# Fig. 4

# Fig. 3a

# Fig. 4a

# Fig. 3b

# Fig. 4b

**EP 0 821 854 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3707762 C2